## Europäisches Patentamt

## European Patent Office

## Office européen des brevets

(11) Publication number: **0 120 552**
**B1**

(12) **EUROPEAN PATENT SPECIFICATION**

(45) Date of publication of patent specification: **25.11.87**

(51) Int. Cl.⁴: **H 04 M 3/56, H 04 Q 11/04**

(21) Application number: **84300153.8**

(22) Date of filing: **11.01.84**

(54) **Conference bridge.**

(30) Priority: **18.01.83 GB 8301323**

(43) Date of publication of application:
**03.10.84 Bulletin 84/40**

(45) Publication of the grant of the patent:
**25.11.87 Bulletin 87/48**

(84) Designated Contracting States:
**AT BE CH DE FR IT LI LU NL SE**

(56) References cited:
**FR-A-2 310 669**
**FR-A-2 334 244**

**SYSTEMS TECHNOLOGY, no. 28, April 1978,
pages 2-6, Liverpool, GB., G. COCHRANE et al.:
"The plessey PDX"**

(73) Proprietor: **PLESSEY OVERSEAS LIMITED
Vicarage Lane
Ilford Essex IGI 4AQ (GB)**

(72) Inventor: **Allan, Paul
37 Charnwood Lane
Arnold Nottingham NG5 6PE (GB)**

(74) Representative: **Allen, Derek
The Plessey Company plc Intellectual Property
Department Vicarage Lane
Ilford Essex, IG1 4AQ (GB)**

Courier Press, Leamington Spa, England.

## Description

The present invention relates to conference bridges and more particular to conference bridges for use in digital time division multiplex PCM telecommunication exchanges. The conference bridge conferences 8 bit PCM data channels.

The conference bridge of the present invention has been designed for use in the electronic switching system as described in our co-pending European Patent Application No. 83304984.4 (EP—A—103437). The conference bridge can be configured to conference 8 bit PCM voice samples which have been encoded linearly or to A law standards or μ law standards. (All 8 KHz sampling rates).

One conference bridge capable of conferencing 8-bit PCM encoded voice samples for use in a digital TDM-PCM exchange is disclosed in GB—A—1498316. In the system of GB—A—1498316, each tdm sample from each party is stored in a party memory and a running total of all parties contributions is stored in an accumulator.

On output to a party, the partys contribution to the last frame is subtracted from the running total, the balance of the running total being output to the party. The partys current contribution is then added to the balance to provide a new running total to be stored in the accumulator.

One problem with a system using a continuously updated total is that any noise or other error inserted into the total remains present throughout the conference and any errors will be cumulative. Such accumulated errors may lead to a gradual degradation of the quality of a conference as it progresses.

Accordingly, one object of the present invention is to provide a conference bridge similar to that outlined above but in which accumulation of errors is inhibited.

Therefore the present invention provides a conference bridge which has a party RAM which stores individual contributions to a conference and a totaliser which stores the calculated total contributions to a conference, each party contribution being subtracted from the calculated total contribution prior to outputting the total to the respective parties, the bridge including means arranged to determine time frame boundaries to cause a total stored in respect of a previous time slot to be erased and a new total calculated from each partys contribution to a subsequent time slot to be used for output.

A conference bridge in accordance with the present invention will now be described, by way of example with reference to the accompaning drawings in which:—

Figure 1 shows the electronic switching system shown in the above co-pending application and including a conference bridge according to the present invention,

Figure 2 shows in block diagrammatic form a conference bridge according to the present invention,

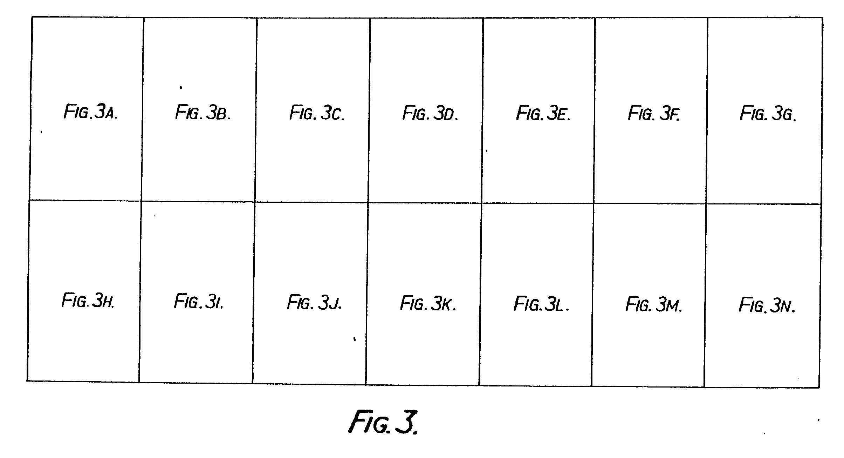

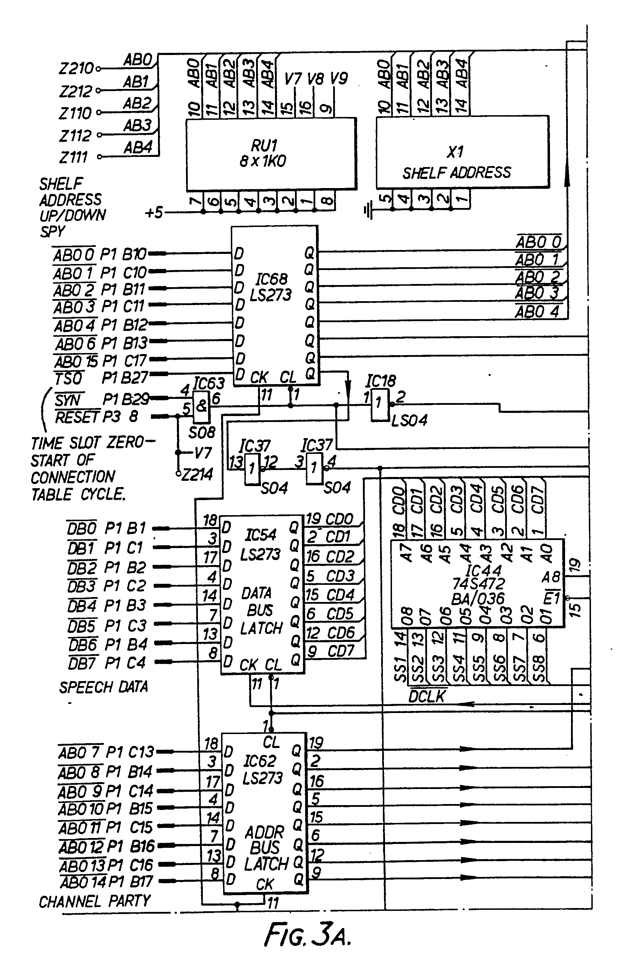

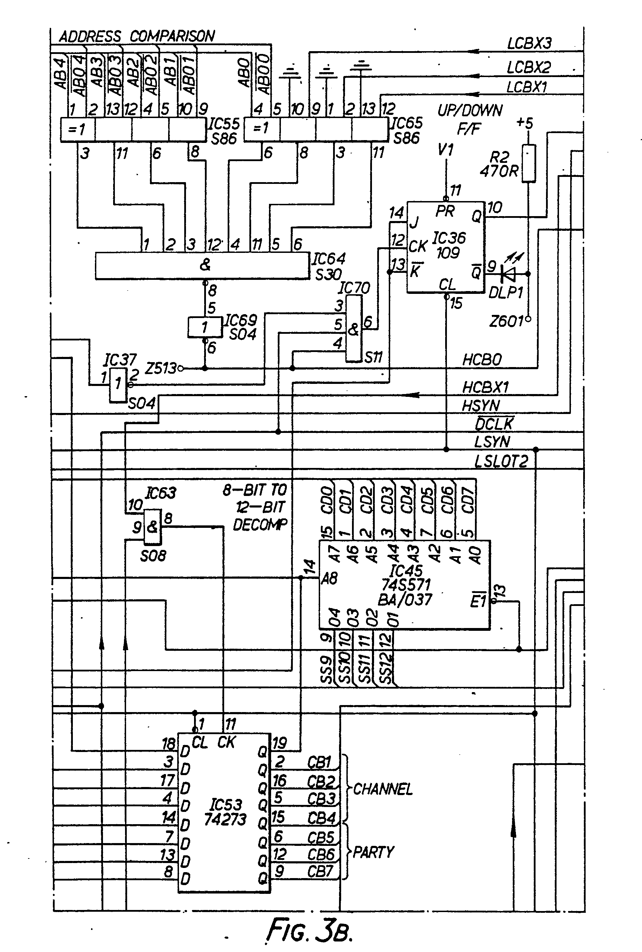

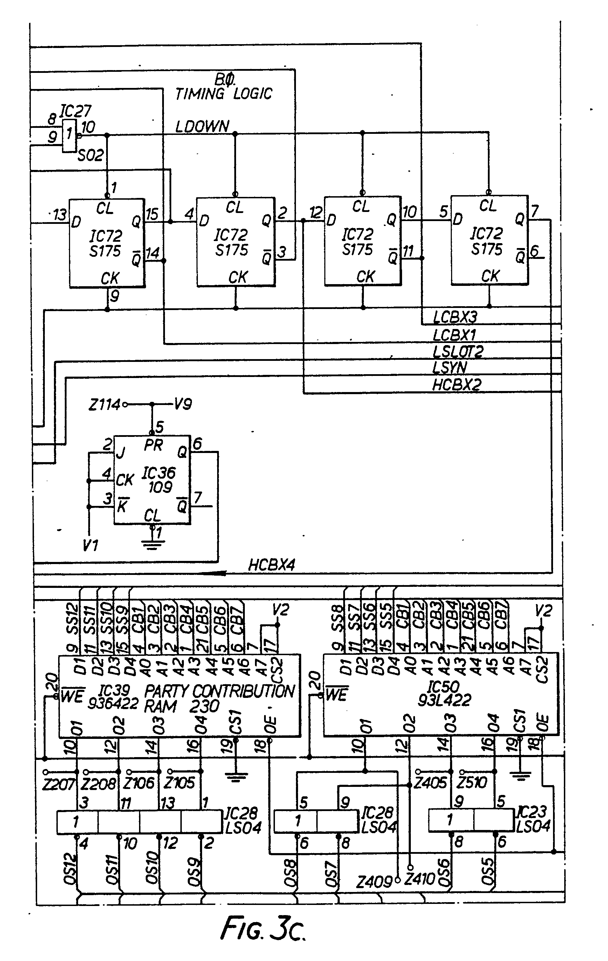

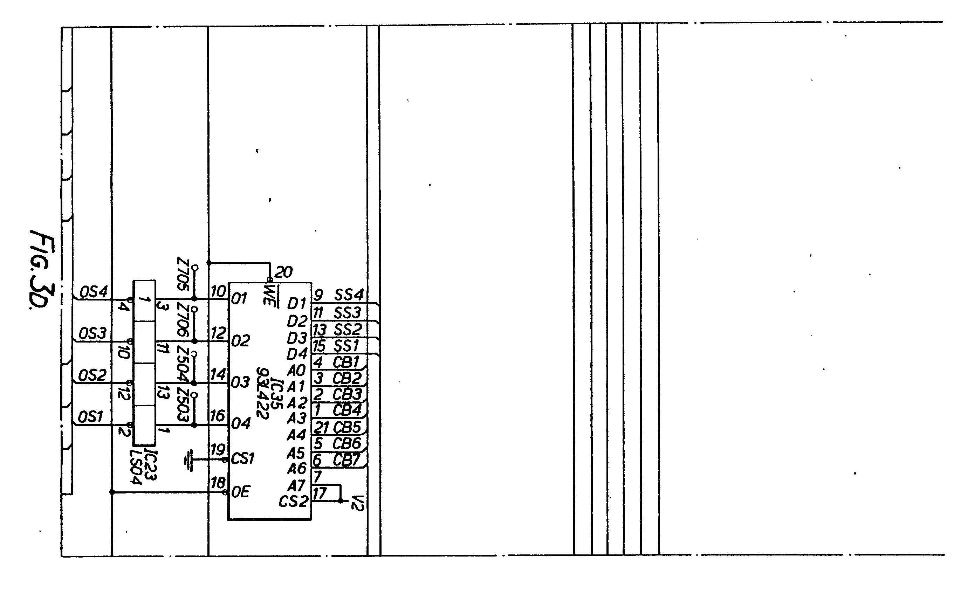

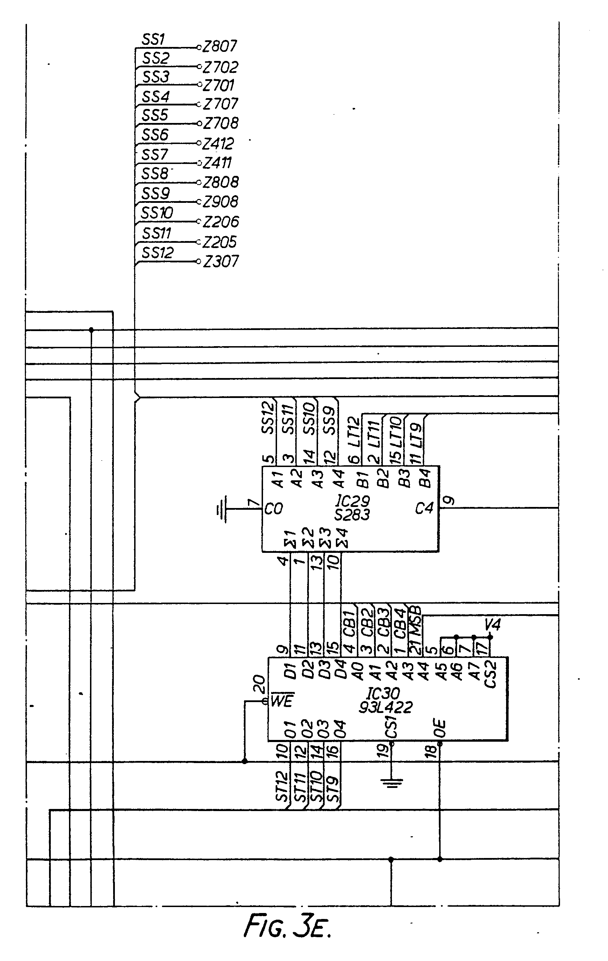

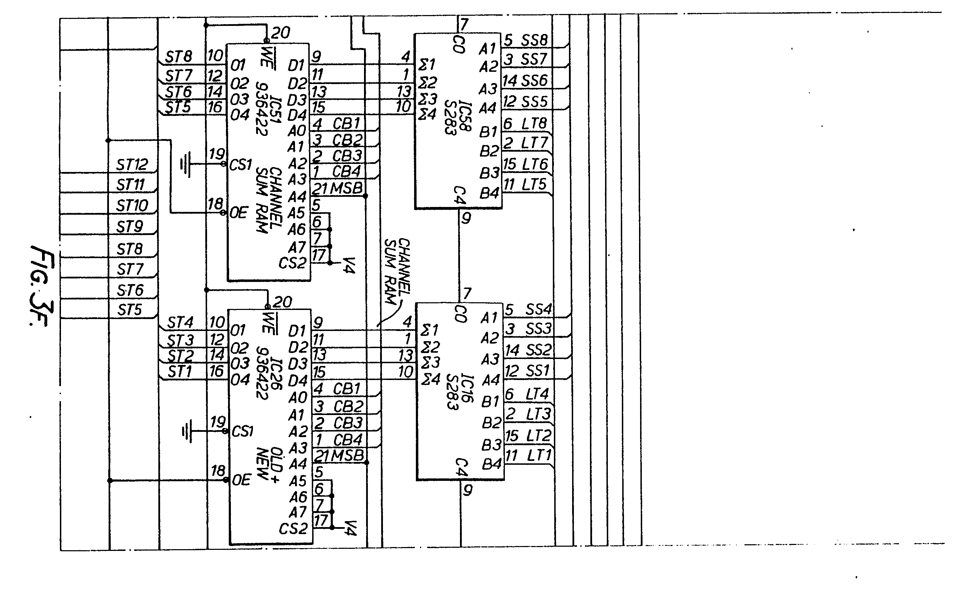

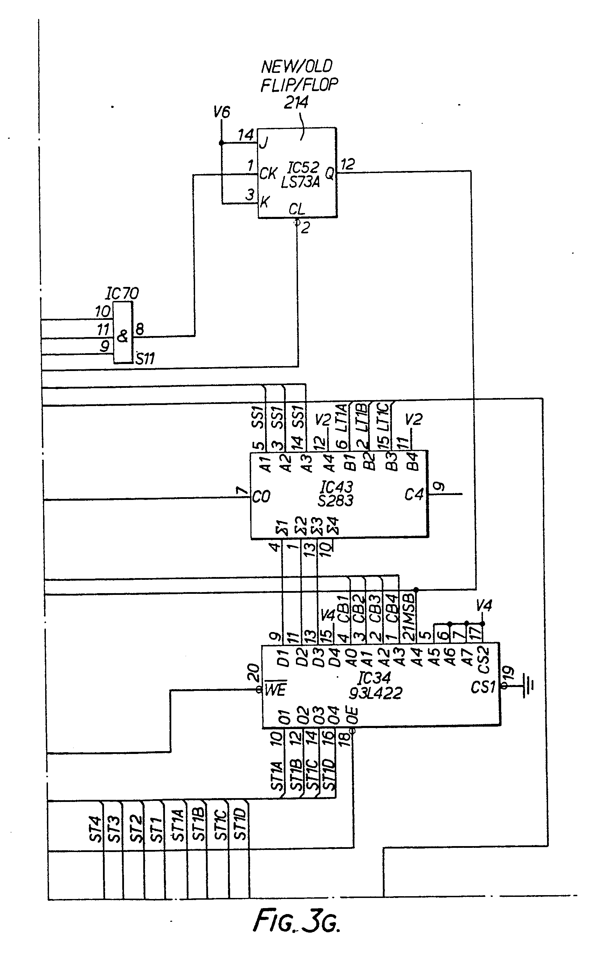

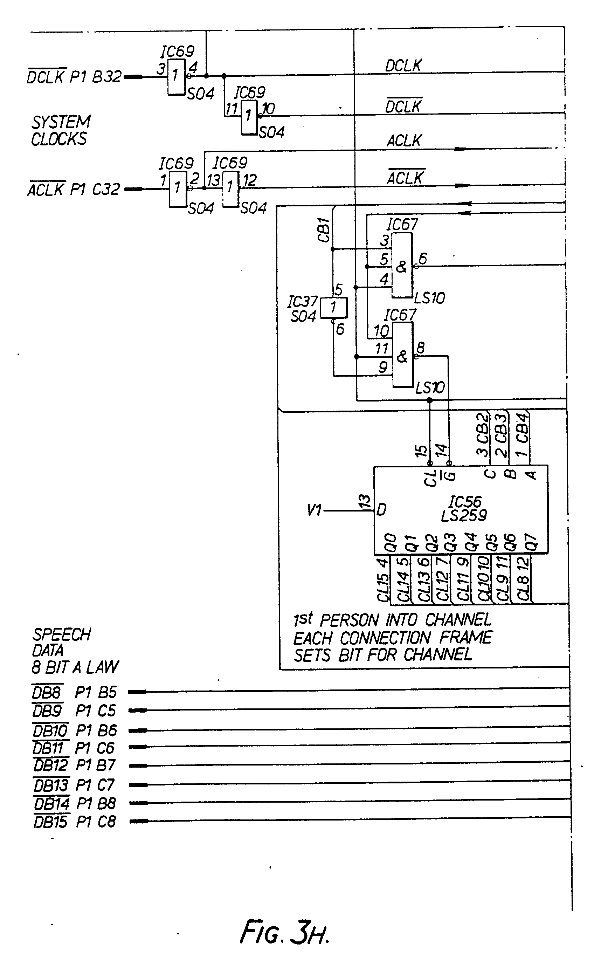

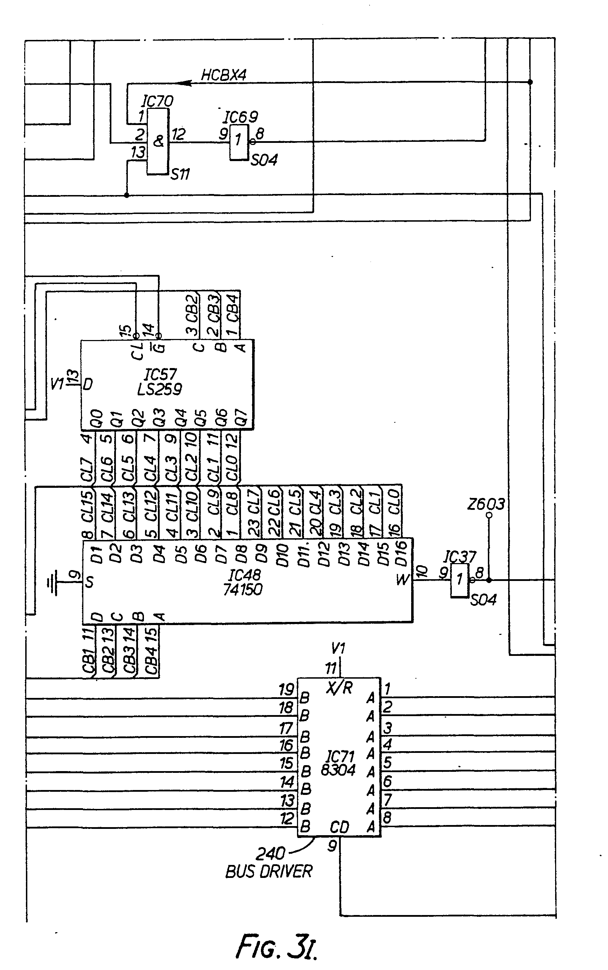

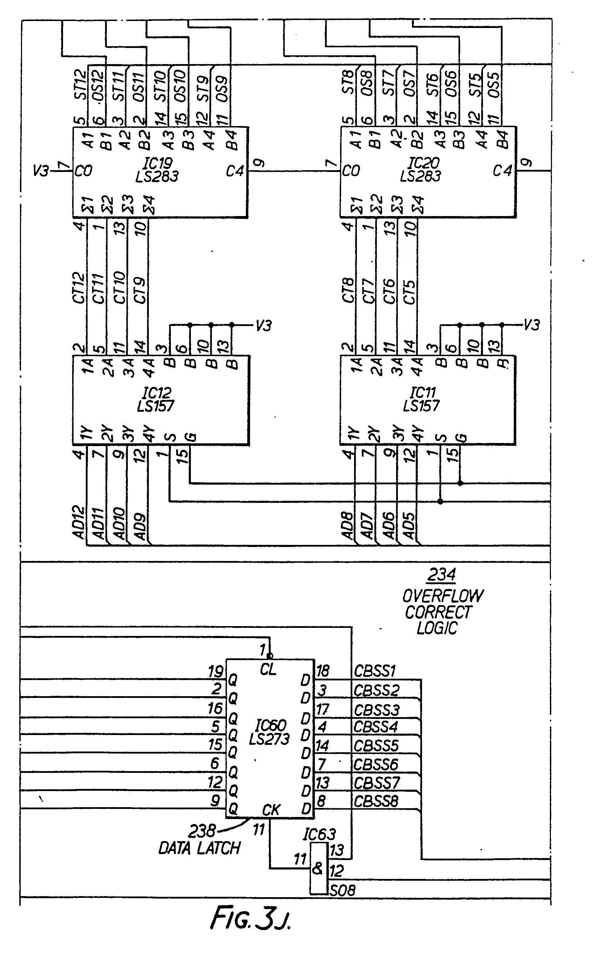

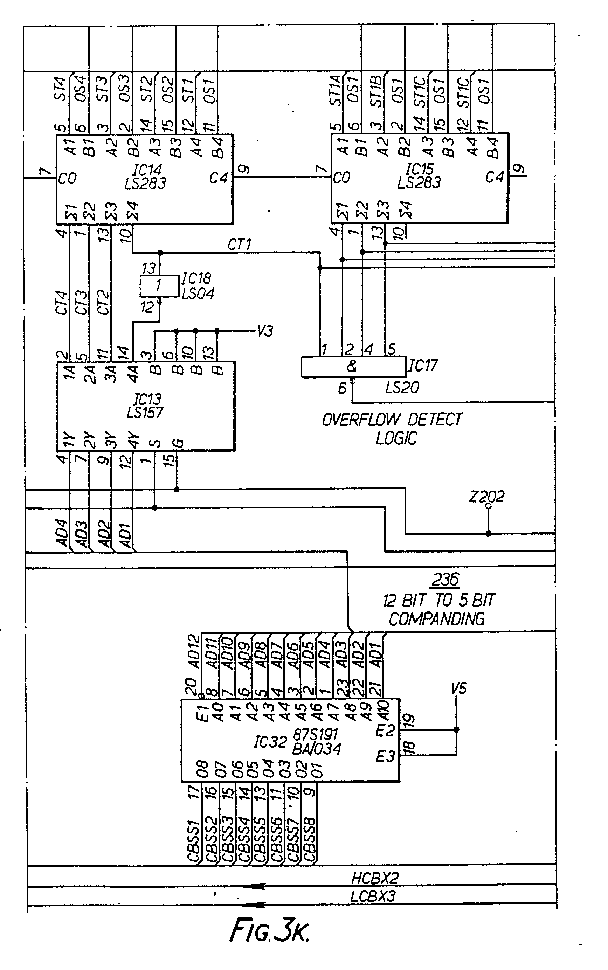

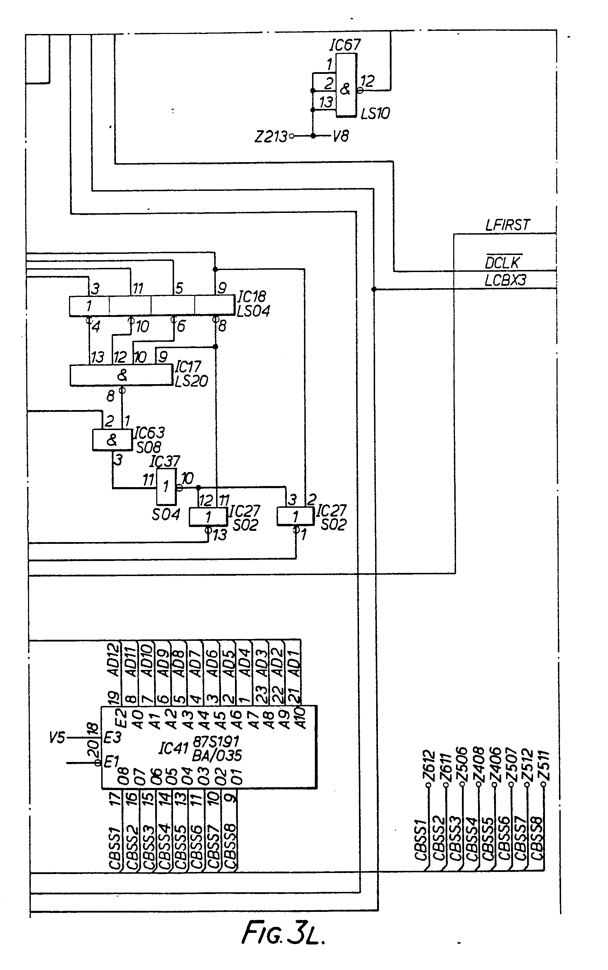

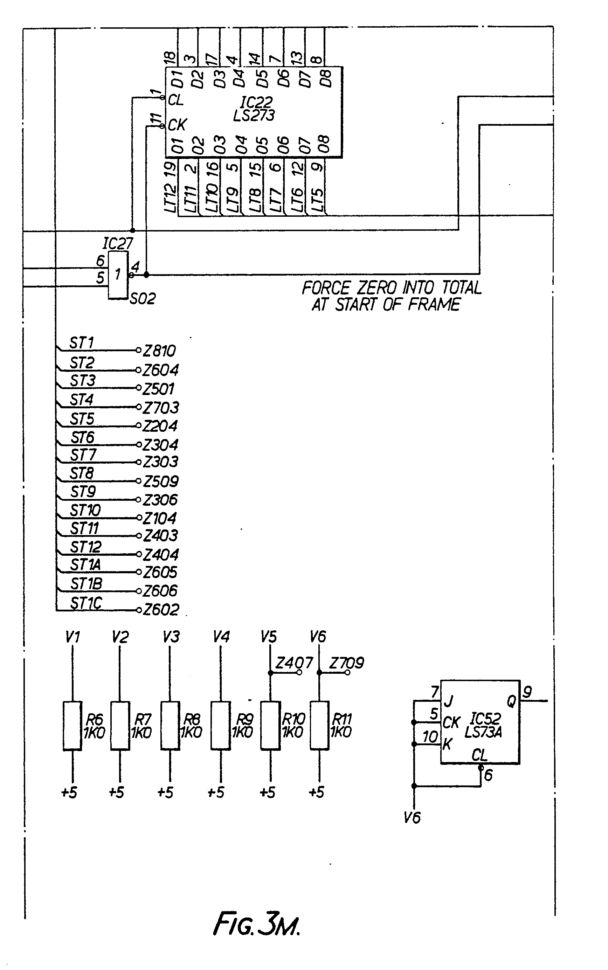

Figure 3 shows the circuit of Figure 2 in greater detail and,

Figure 4 shows an exemplary generalised timing system for a conference bridge of Figure 2.

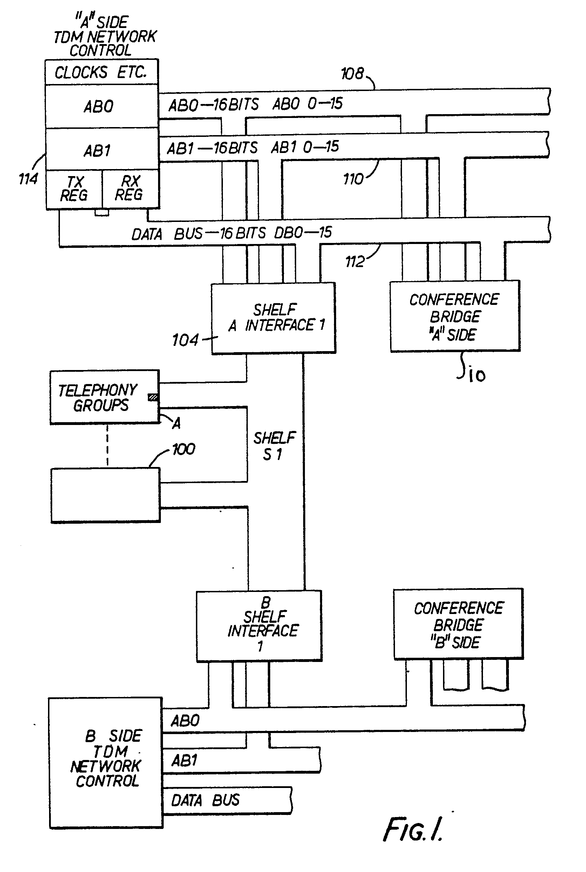

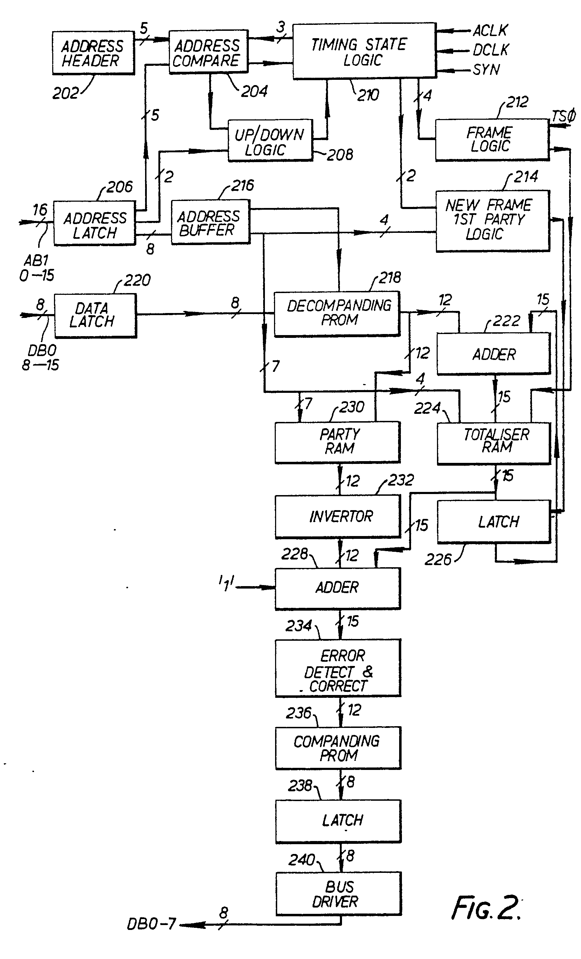

With reference to Figure 1, the conference bridge 10 is equivalent to a whole shelf and hence has a shelf address within the system of Figure 1. It is addressable by the control computer (not shown) via the TDM network controller 114 and address bus AB0 and data bus DB0. Data is transmitted by the bridge on the lower byte of the bus (bits 8—15) and received on the upper byte (bits 0—7)—see Figure 2.

In the telephone system such as described in the above co-pending Application the exchange for security has two separate control systems A and B and a conference bridge is allocated to each of the sides as shown. The operation of both bridges is identical.

The Address bus command structure is of the form

```
0  1  2  3  4  5  6  7  8  9  10  11   12  13  14  15
└─────────┘  X  └─┘  └────────┘   └────────┘  └──┘
     1            2        3           4         5
```

1) Shelf address
2) Up/down control
3) Conference channel number
4) Conference Party number
5) Transmit only. Function Control.

See timing diagram for detailed timings.

Each conference is allocated a unique channel number and each party within a conference a unique party number, the resulting seven bit address thus defines the individual contributions to a conference. This contribution may consist of 8 bit linearly encoded PCM voice or data samples or A law or μ law encoded PCM samples. The remaining bit is used to enable an operator or other party to listen in on a conference without providing contributions to the conference. Thus enabling call monitoring functions to be performed.

The conference bridge provides a two way connection by accumulating speech samples in the present time frame and supplying speech samples from the previous time frame's calculations. The output of the conference bridge in a given time frame is the algebraic sum of the previous frame's samples (for a given conference channel) less the contribution of the party receiving the output. (A time frame is 125 μs long in the system described).

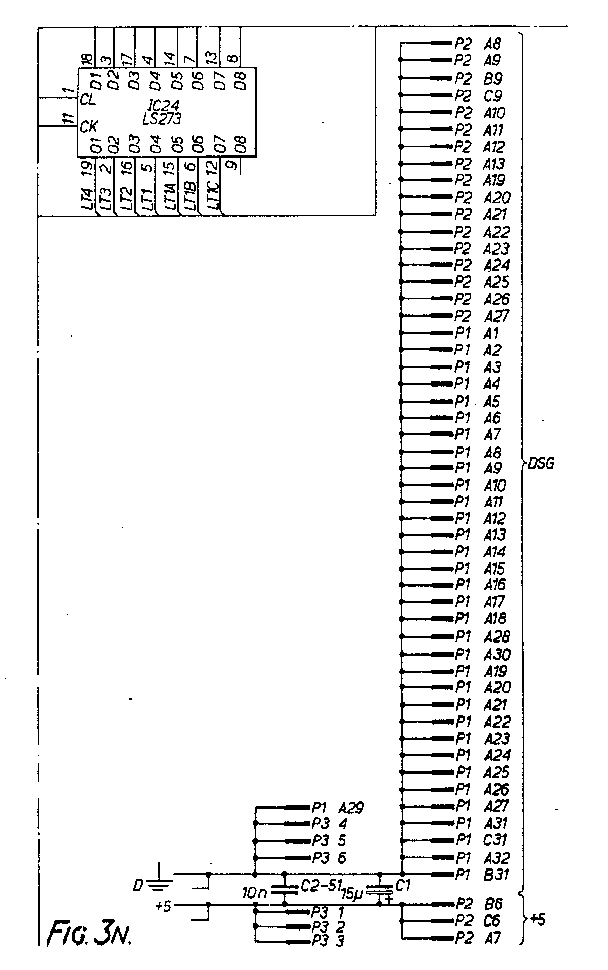

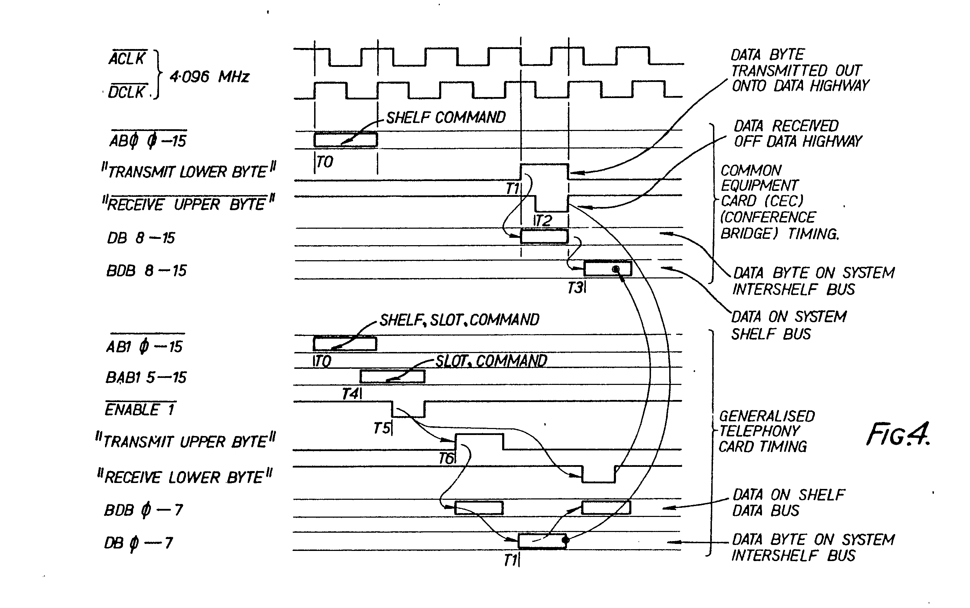

The conference bridge must not be addressed more often than once every four time slots each time slot being 144n sec long. That is, if time slot n contains a conference bridge entry then time slots n+1, n+2,

2

**0 120 552**

n+3 must not contain any conference bridge entry. These connection constraints are needed in order for the conference bridge to receive and transmit data onto the system data bus at the required time. The timing of signals can be seen from Figure 4 in which the upper set of waveforms and time slots CEC represent the timings for the Common Equipment Card—in this case the conference bridge and the lower set of waveforms and time slots represent the timings for examples for the telephony cards which require conference facilities. At time T0 a shelf command to operate the conference bridge is transmitted on AB0. At time T1 a data byte is transmitted out onto the parallel data highway and at time T2 after a short delay the data byte is received off the data highway. Also at time T1 a data byte is transmitted on the system intershelf bus on DB0 8—15 and at time T3 data is transmitted on the system shelf bus.

For the telephony card a similar set of timings is required with a shelf slot command being given at time T0 generating a slot command at time T4 which in turn generates an enable signal at time T5 causing data to be transmitted at time T6 at which time data on shelf data bus DB0 bits 0—7 may be received from the conference bridge. At time T1 the data is present on the intershelf bus.

Thus it may be seen that in a telephone exchange system correct synchronisation is necessary to ensure that data (voice samples) are received by the conference bridge at the correct time and that sufficient time is allowed to enable the conferencing to be carried out prior to the receipt of the conferenced signals by each subscriber associated with a telephony card.

Bits 6 and 7 control the updown function, if the conference bridge has been 'downed' it will ignore any commands sent to it on the address bus.

| Bit 6 | Bit 7 | |
| --- | --- | --- |
| 0 | X | Normal conference bridge usage |
| 1 | 0 | Down command |
| 1 | 1 | Up command |

Because the commands sent to the bridge define the conference channel number (up to sixteen 0—15) and the party number in each conference (0—7) uniquely the order of command connections in the connection table does not matter. Thus as each party joins a conference he is merely allocated the next slot in the connection table.

If the speech samples in any conference channel on addition cause overflow to occur then the output is forced to plus or minus full scale.

With reference now to Figure 2 the conference bridge comprises an address header circuit 202 which defines which shelf in the system the conference bridge appears to be. As the bridge occupies a whole shelf only a shelf address is required. The connections within the conference bridge are normally PCM coded signals fed in parallel over paths whose width is indicated by the numerals giving the number of parallel paths.

The output of the address header is connected to a first input of an address comparison circuit 204 which checks to see if the address bus AB0 (0—15) is addressing the conference bridge. The address input from system address bus AB0 (0—15) is latched into a latch circuit 206. A card enable up/down logic circuit 208 is included to enable the particular conference bridge to be enabled or disabled. In the latter case the alternative (B side) conference bridge will take over.

The up/down logic circuit 208 is connected to enable a timing state logic circuit 210 which controls the reception and transmission timings of data onto and off the system bus.

One output of the timing state logic circuit 210 is fed to a frame logic circuit 212 which controls the switching over at each time frame boundary of the running totals of each conference to give a total for a given time frame.

A second output from the timing state logic circuit 210 is fed to a new frame first party logic circuit 214 which allows a first person into a conference to be written in and then every other party to be added to the conference.

Eight bits of the output of the address latch 206 are fed to an address buffer 216. A first output of buffer 216 is used to identify in the new frame first party logic circuit 214 that a conference is required. A second output is used to initiate a decompanding PROM 218 which converts incoming 8 bit linear, A law or μ law speech samples received from the upper byte of the system data bus DB0 (bits 8—15) via latch 220 into 12 bit linear PCM signals for addition in an adder 222. The adder 222 produces a 15 bit output signal to a totaliser RAM 224 which calculates the total contributions for each conference as controlled by the frame logic circuit 212 and identified by the output from the address buffer 216.

The 15 bit output from adder 222 is necessary to allow the addition of more than one 12 bit number. Each output of the totaliser RAM 224 is fed back to the adder 222 via a latch 226 for addition to the next parties contribution and also to an adder 228.

Each incoming parties contribution is stored in a party RAM 230 which stores each parties contribution in the last time frame. This contribution is accessed when the conference total is output from the totaliser

3

# 0 120 552

RAM 224 and is subtracted therefrom by inverting it in an inverter 232 and adding the two sums together in adder 228 to give an effective subtraction.

The output of adder 228 is fed to an error detect and correct circuit 234 which detects if the remaining total (which is equal to the sum of all the parties contributions less the addressed party's own contribution) is still greater than the maximum permitted value and if it is it forces full scale output (either positive or negative as required) to avoid any over/under flow to the companding PROM 236 which recompands the now 12 bits linear to A law, µ law or to 8 bits linear. The output of PROM 236 is fed to a latch circuit 238 which stores the finalised PCM sample prior to transmission onto output data bus DB 0—7 via a bus driver 240.

## Claims

1. A conference bridge for use in a digital time division multiplex pulse code modulation telecommunication exchange including a party RAM (230) which stores individual party's contributions to a conference and a totaliser RAM (224) which stores the calculated total contributions for each conference, means (232, 228) for subtracting each party's individual contribution to a conference from the calculated total contribution to the conference prior to the individual party receiving the conference total, in which each conference is allocated a unique channel number and each party within a conference is allocated a unique party number thus allowing each party to join a conference in any order characterised in that the bridge comprises control means (212, 214) which identifies the first party in each conference and which, on receipt of a further speech sample from the first party, causes clearance of the calculated total contributions from the penultimate preceding time period from the totaliser RAM (224) and thereafter output of newly calculated total contributions from the ultimate preceding time period, contributions for the current time period being totalised for output in the next succeeding time period.

2. A conference bridge as claimed in claim 1 in which a time slot is allocated in each conference to allow an operator to listen in to a conference without contributing to the conference.

3. A conference bridge as claimed in claim 2 in which each party contributes an 8 bit PCM coded signal to the conference, in which each 8 bit signal is converted to a 12 bit linear PCM signal prior to being added to each other signal in the conference, in an adder and in which following said addition a 15 bit PCM signal is created to allow for the expanded sum.

## Patentansprüche

1. Konferenz-Brücke für den Einsatz in einer digitalen zeitmultiplexen Pulscodemodulations-Fernmeldeanlage, ein Teilnehmer RAM (230) umfassend, welches individuelle Teilnehmerbeiträge an eine Konferenz speichert und ein Totalisator RAM (224) umfassend, welches die errechneten Beitragstotale für jede Konferenz speichert, mit Vorrichtungen (232, 228), um den individuellen Beitrag jedes Teilnehmers an der Konferenz vom errechneten Beitragstotal an die Konferenz zu subtrahieren, bevor das Konferenztotal durch den individuellen Teilnehmer erhalten wird, und wobei jeder Konferenz eine zugehörige Kanalnummer zugeordnet ist, und jedem Teilnehmer innerhalb der Konferenz eine zugehörige Teilnehmernummer zugeordnet ist, wodurch sich jeder Teilnehmer an die Konferenz in beliebiger Folge anschliessen kann, dadurch gekennzeichnet, dass die Brücke Steuerorgane (212, 214) umfasst, welche den ersten Teilnehmer an jeder Konferenz identifizieren, und welche, auf Empfang eines weiteren Sprechsegmentes vom ersten Teilnehmer, Löschung des errechneten Beitragstotals der vorletzten, vorangegangenen Zeitperiode vom Totalisator RAM (224) veranlasst, und darauf neuerdings errechnete Beitragstotale von der letzten vorangegangenen Zeitperiode ausgibt, wobei die Beiträge für die laufende Zeitperiode zur Ausgabe in der nächstfolgenden Zeitperiode, totalisiert werden.

2. Konferenz-Brücke nach Anspruch 1, bei der ein Zeitspalt in jeder Konferenz zugeteilt ist, um einem Operator zu ermöglichen, in die Konferenz hineinzuhören, ohne selbst an der Konferenz teilzunehmen.

3. Konferenz-Brücke nach Anspruch 2, bei der jeder Teilnehmer ein 8 bit PCM codiertes Signal an die Konferenz beisteuert und jedes 8 bit Signal in ein 12 bit lineares PCM Signal gewandelt wird, bevor es zu jedem anderen Signal in der Konferenz in einem Addierer addiert wird und in der, nach besagter Addition, ein 15 bit PCM Signal erzeugt wird, um die erweiterte Summe zu ermöglichen.

## Revendications

1. Pont de conférence destiné à être utilisé dans un central numérique de télécommunications fonctionnant par modulation par impulsions et codage et par multiplexage temporel, comprenant une mémoire à accès direct de partie (230) qui conserve les contributions d'une partie individuelle à une conférence et une mémoire à accès direct de totalisateur (224) qui conserve les contributions totales calculées à chaque conférence, un dispositif (232, 228) destiné à soustraire la contribution individuelle de chaque partie à une conférence de la contribution totale calculée à la conférence avant que la partie individuelle reçoive le total de la conférence, dans lequel chaque conférence se voit attribuer un numéro original de canal et chaque partie à la conférence se voit attribuer un numéro original de partie, si bien que chaque partie peut se joindre à une conférence, dans un ordre quelconque, caractérisé en ce que le pont

**0 120 552**

comporte un dispositif de commande (212, 214) qui identifie la première partie à chaque conférence et qui, après réception d'un échantillon supplémentaire de parole provenant de la première partie, provoque l'effacement des contributions totales calculées pour la pénultième période précédente dans la mémoire à accès direct de totalisateur (224), puis qui transmet des contributions totales calculées à nouveau pour la dernière période précédente, les contributions pour la période actuelle étant totalisées pour le signal de sortie dans la période suivante.

2. Pont de conférence selon la revendication 1, dans lequel une tranche temporelle est affectée, dans chaque conférence, afin qu'elle permettre à un opérateur d'écouter une conférence sans contribuer à celle-ci.

3. Pont de conférence selon la revendication 2, dans lequel chaque partie contribue à la conférence par un signal codé par modulation par impulsions et codage à 8 bits, dans lequel chaque signal à 8 bits est transformé en un signal linéaire à 12 bits modulé par impulsions et codage avant addition à chaque autre signal de la conférence, dans un additionneur, et dans lequel, après l'addition, un signal à 15 bits formé par modulation par impulsions et codage est créé afin qu'il permette l'obtention d'une somme expansée.

FIG.1.

FIG.2.

| | | | | | | |
|---|---|---|---|---|---|---|
| *FIG. 3A.* | *FIG. 3B.* | *FIG. 3C.* | *FIG. 3D.* | *FIG. 3E.* | *FIG. 3F.* | *FIG. 3G.* |
| *FIG. 3H.* | *FIG. 3I.* | *FIG. 3J.* | *FIG. 3K.* | *FIG. 3L.* | *FIG. 3M.* | *FIG. 3N.* |

*FIG. 3.*

FIG. 3A.

0 120 552

FIG. 3B.

FIG. 3C.

FIG.3D.

FIG. 3E.

FIG. 3F.

**0 120 552**

FIG. 3G.

FIG. 3H.

FIG. 31.

FIG. 3J.

FIG.3K.

**0 120 552**

FIG. 3L.

FIG. 3M.

FIG. 3N.

FIG.4.